# EUROPÄISCHE PATENTANMELDUNG

(11) **EP 1 120 643 A2**
(43) Veröffentlichungstag der Anmeldung: **01.08.2001**
(21) Anmeldenummer: 01100473.6
(22) Anmeldetag: 09.01.2001
(51) Int. Cl.: G01N 21/64

(54) **Anordnung zur Detektion von Fluoreszenzlicht mehrerer Probenpunkte**

(30) Priorität: 28.01.2000 DE 10003754
(71) Anmelder: Leica Microsystems Heidelberg GmbH, 68165 Mannheim (DE)
(72) Erfinder: Engelhardt, Johann, 76669 Bad Schönborn (DE)
(74) Vertreter: Reichert, Werner F., Dr.

(57) **Zusammenfassung**

Es wird eine Anordnung zur Detektion von Fluoreszenzlicht mehrerer Probenpunkte (2), insbesondere von Microgen- oder Microbiospots, vorgeschlagen, wobei die Probenpunkte (2) auf einem Objektträger (1) angeordnet sind. Diese Anordnung umfasst mindestens eine Lichtquelle zum simultanen Beleuchten der Probenpunkte (2) mit Anregungslicht und Detektionselemente (3) umfassende Detektionsmittel zum simultanen Detektieren des Fluoreszenzlichtes der einzelnen Probenpunkte (2). Erfindungsgemäß ist der Abstand d zwischen den Probenpunkten (2) und den jeweils zugeordneten Detektionselementen (3) möglichst gering gewählt.

## Beschreibung

Die Erfindung betrifft eine Anordnung zur Detektion von Fluoreszenzlicht mehrerer Probenpunkte, insbesondere von Microgen- oder Microbiospots, wobei die Probenpunkte auf einem Objektträger angeordnet sind, mit mindestens einer Lichtquelle zum simultanen Beleuchten der Probenpunkte mit Anregungslicht und mit Detektionselemente umfassenden Detektionsmitteln zum simultanen Detektieren des Fluoreszenzlichtes der einzelnen Probenpunkte.

Derartige Anordnungen werden beispielsweise für molekularbiologische oder gentechnische Untersuchungen verwendet. Die zu untersuchende Probe wird dazu auf einen Objektträger aufgebracht und mit einem fluoreszierenden Markierungsstoff in Kontakt gebracht. Die in der Probe befindlichen, eine Affinität zum Markierungsstoff aufweisenden Stoffe binden den Markierungsstoff und können in Folge zur Emission von Fluoreszenzlicht angeregt werden. Durch Detektion des von einer Probe ausgesandten Fluoreszenzlichts können also Rückschlüsse auf die Zusammensetzung der Probe gezogen werden.

In der europäischen Patentanmeldung EP 0 947 823 A2 wird eine Vorrichtung zum Nachweis eines Fluoreszenzfarbstoffs in Proben beschrieben, wozu die einzelnen Probenpunkte auf einem Objektträger angeordnet werden. Dieser Objektträger ist in Form eines Lichtleiters ausgebildet. Zur Anregung des Fluoreszenzfarbstoffs in den einzelnen Probenpunkten wird Licht in den Objektträger eingekoppelt. Der Fluoreszenzfarbstoff wird dann durch das sich an der Grenzfläche zwischen Objektträger und den Probenpunkten ausbildende evaneszente Feld angeregt. Mit der bekannten Vorrichtung läßt sich das Fluoreszenzlicht einer Reihe von Probenpunkten simultan erfassen, wozu bspw. ein lineares Fotodiodenfeld oder auch eine CCD-Zeile als Detektionseinrichtung verwendet wird. Die in der EP 0 947 823 A2 beschriebene Vorrichtung ermöglicht neben statistischen Untersuchungen, bei denen eine Zuordnung der detektierten Fluoreszenzstrahlung zu einem bestimmten Probenpunkt nicht erforderlich ist, auch simultane Einzeluntersuchungen einer Vielzahl von Probenpunkten, bei denen das Fluoreszenzlicht jedes einzelnen Probenpunktes zuordenbar erfasst wird. Dazu wird die Verwendung eines Linsensystems vorgeschlagen, mit dem die emittierte Fluoreszenzstrahlung der einzelnen Probenpunkte auf die Einrichtung zum Detektieren der Fluoreszenzstrahlung fokussiert wird.

Diese Maßnahme erweist sich in der Praxis sowohl in konstruktiver Hinsicht als auch im Hinblick auf die Messführung als sehr aufwendig. Schon die Realisierung eines geeigneten Linsensystems erfordert eine hohe Fertigungspräzision. Hinzu kommt, dass das Linsensystem zwischen dem mit Probenpunkten versehenen Objektträger und der Detektionseinrichtung nicht nur angeordnet, sondern auch sehr genau justiert werden muss, um den gewünschten Fokussierungseffekt zu erzielen.

Mit der vorliegenden Erfindung wird nun eine sehr einfache aber äußerst effektvolle Maßnahme vorgeschlagen, mit der eine Überlagerung des von mehreren Probenpunkten ausgesandten Fluoreszenzlichts am Ort eines Detektionselements, d.h. am Ort der Messwerterfassung, verhindert wird.

Dazu wird erfindungsgemäß vorgeschlagen, den Abstand zwischen den Probenpunkten und den jeweils zugeordneten Detektionselementen möglichst gering zu wählen, so dass die Erfassung des Fluoreszenzlichts der einzelnen Probenpunkte nach Art der Herstellung eines fototechnischen Kontaktabzugs erfolgt. Erfindungsgemäß ist nämlich erkannt worden, dass sich auf diese Weise sehr einfach sehr gute Ergebnisse erzielen lassen.

In vorteilhafter Weise könnten die Detektionsmittel für jeden Probenpunkt ein eigenes Detektionselement umfassen. Je nach Erfordernis könnten alternativ hierzu jedem Probenpunkt jeweils mehrere Detektionselemente zugeordnet sein. Hierbei ist auf den jeweiligen Anwendungsfall abzustellen.

Um eine Überlagerung des Fluoreszenzlichts mehrerer Probenpunkte am Ort eines Detektionselements oder mehrerer jeweils zugeordneter Detektionselemente zu vermeiden, können im Rahmen der vorliegenden Erfindung auch noch zusätzliche Mittel vorgesehen sein. In einer vorteilhaften Variante ist dazu zwischen den Probenpunkten und den Detektionselementen mindestens ein Element angeordnet, das durchlässig ist für von einem Probenpunkt im wesentlichen in Richtung des zugeordneten Detektionselements ausgesandtes Fluoreszenzlicht und das in Richtung benachbarter Probenpunkte ausgesandtes Fluoreszenzlicht total reflektiert, so dass dieses Fluoreszenzlicht nicht detektiert wird. Ein solches Element läßt sich bspw. in Form einer Glasplatte realisieren, die zwischen den Probenpunkten und den Detektionselementen angeordnet ist, vorausgesetzt, dass der Objektträger ebenfalls plattenförmig ausgebildet ist und die Detektionselemente in einer Ebene parallel zum Objektträger und gegenüber der mit den Probenpunkten versehenen Oberfläche des Objektträgers angeordnet sind. Das in einem steilen Winkel von den Probenpunkten in Richtung der Detektionselemente emittierte Fluoreszenzlicht kann eine solche Glasplatte ungehindert durchdringen, während das in Richtung benachbarter Probenpunkte emittierte Fluoreszenzlicht an der Glas-Luft-Grenzschicht totalreflektiert und wieder in Richtung des Objektträgers abgelenkt wird. Eine derartige Glasplatte hat im Gegensatz zu dem in der EP 0 947 823 A2 beschriebenen Linsensystem den Vorteil, dass sie nicht speziell justiert werden muss. Sie ist ausserdem auch billiger in der Herstellung und Wartung.

Ergänzend oder auch alternativ zu dem voranstehend beschriebenen Element läßt sich eine Überlagerung des Fluoreszenzlichtes mehrerer Probenpunkte am Ort eines Detektionselements oder mehrerer jeweils zugeordneter Detektionselemente auch wirkungsvoll mit Hilfe von mechanischen, lichtundurchlässigen Barrieren unterdrüc??ken, die so zwischen den Probenpunkten und den Detektionselementen angeordnet sind, dass sie Detektionskanäle für die einzelnen Probenpunkte und zugeordneten Detektionselemente begrenzen.

Wie bereits erwähnt, umfassen die Detektionsmittel der erfindungsgemäßen Anordnung für jeden Probenpunkt ein eigenes Detektionselement. In der Praxis hat sich in diesem Zusammenhang die Verwendung von Fotodiodenarrays oder CCD-Chips bewährt.

Auch die Beleuchtung der Probenpunkte mit Anregungslicht läßt sich im Rahmen der erfindungsgemäßen Anordnung zur Detektion von Fluoreszenzlicht mehrerer Probenpunkte auf unterschiedliche Art und Weise realisieren. Eine vorteilhafte Variante stellt die sogenannte Durchlichtbeleuchtung dar. In diesem Falle ist der Objektträger zumindestens für das Anregungslicht durchlässig. Die Lichtquelle ist dann auf der den Probenpunkten abgewandten Seite des Objektträgers angeordnet, so dass die Probenpunkte durch den Objektträger hindurch beleuchtet werden. Eine andere vorteilhafte Variante stellt die totalinterne Beleuchtung durch den Objektträger dar. In diesem Falle ist der Objektträger in Form eines Lichtleiters ausgebildet. Ausserdem sind Mittel zum Einkoppeln des Lichts der Lichtquelle in den Lichtleiter vorgesehen, so dass die Probenpunkte von dem sich an der Grenzfläche zwischen Objektträger und Probenpunkt ausbildenden evaneszenten Feld beleuchtet werden.

Schliesslich sei noch erwähnt, dass in einer besonders vorteilhaften Variante der erfindungsgemäßen Anordnung zur Detektion von Fluoreszenzlicht mehrerer Probenpunkte zusätzlich noch eine Filteranordnung zwischen den Probenpunkten und den Detektionselementen angeordnet ist, die im wesentlichen nur für das zu detektierende Fluoreszenzlicht durchlässig ist. Eine solche Filteranordnung könnte in einer einfachsten Ausführungsform lediglich einen Sperrfilter für das von der Lichtquelle ausgesandte Anregungslicht umfassen, um dadurch bedingte Störeinflüsse bei der Detektion des von den Probenpunkten emittierten Fluoreszenzlichtes zu unterdrüc??ken. Für den Fall, dass die Probenpunkte vor der Messung mit verschiedenen Markierungsstoffen in Kontakt gebracht worden sind, so dass die Proben Fluoreszenzlicht unterschiedlicher Wellenlänge emittieren, kann es auch sinnvoll sein, eine solche Filteranordnung mit verschiedenen Filtern für das Fluoreszenzlicht unterschiedlicher Wellenlänge auszustatten, um alternativ verschiedene Fluoreszenzfarbstoffe gleichzeitig nachweisen zu können.

Vorteilhafte Ausgestaltungen und Weiterbildungen der Erfindung werden nachfolgend anhand von Ausführungsbeispielen in Verbindung mit den Figuren erläutert.
- Fig. 1: zeigt die Aufsicht auf einen Objektträger mit Probenpunkten,
- Fig. 2: zeigt die Anordnung von Detektionsmitteln über dem in Fig. 1 dargestellten Objektträger,
- Fig. 3: zeigt die Schnittdarstellung einer Anordnung zur Detektion von Fluoreszenzlicht mehrerer Probenpunkte zur Erläuterung des Strahlenganges des Fluoreszenzlichts,
- Fig. 4: zeigt die Schnittdarstellung einer erfindungsgemäßen Anordnung mit Durchlichtbeleuchtung für die Probenpunkte,
- Fig. 5: zeigt die Schnittdarstellung einer erfindungsgemäßen Anordnung mit totalinterner Beleuchtung der Probenpunkte,
- Fig. 6: zeigt die in Fig. 3 dargestellte Anordnung zur Erläuterung des Strahlenganges des Fluoreszenzlichtes und
- Fig. 7: zeigt eine weitere erfindungsgemäße Anordnung mit mechanischen Barrieren für das Fluoreszenzlicht.

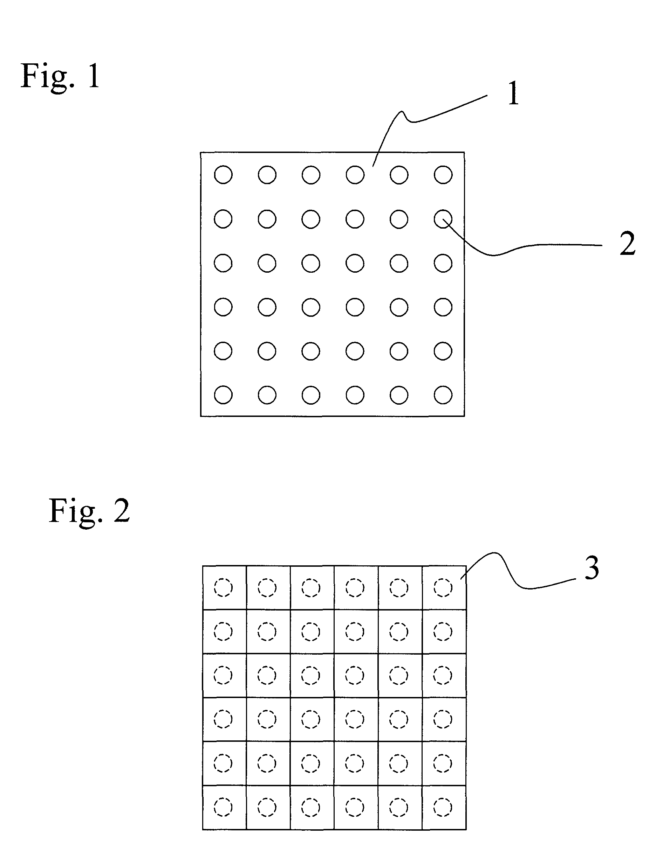

Auf dem in Fig. 1 dargestellten Objektträger 1 sind Probenpunkte 2 in einem Raster angeordnet. Bei den Probenpunkten 2 handelt es sich um Microspots, deren Durchmesser ca. 10 bis 100 µm betragen.

Die einzelnen Probenpunkte sind mit einem fluoreszierenden Markierungsstoff in Kontakt gebracht worden, so dass sie bei Beleuchtung mit entsprechendem Anregungslicht Fluoreszenzlicht emittieren.

Mit Hilfe der erfindungsgemäßen Anordnung zur Detektion von Fluoreszenzlicht werden mehrere Probenpunkte - hier alle auf dem Objektträger 1 angeordneten Probenpunkte 2 - simultan mit Anregungslicht beleuchtet. Auch die Detektion des Fluoreszenzlichtes der einzelnen Probenpunkte 2 erfolgt mit Hilfe der erfindungsgemäßen Anordnung simultan, wobei die hierfür verwendeten Detektionsmittel für jeden Probenpunkt ein eigenes Detektionselement umfassen.

In dem in Fig. 2 dargestellten Ausführungsbeispiel erfolgt die simultane Detektion des Fluoreszenzlichtes der einzelnen Probenpunkte 2 mit Hilfe eines Fotodiodenarrays, das so über der Anordnung der Probenpunkte 2 auf dem Objektträger 1 angeordnet ist, dass jeder Probenpunkt 2 von genau einer Fotodiode 3 des Fotodiodenarrays überdeckt wird.

Da das von den einzelnen Probenpunkten emittierte Fluoreszenzlicht keine Vorzugsrichtung aufweist, kann es am Ort der Detektionselemente zu einem Überstrahlen, d.h. zu einer Überlagerung des von den einzelnen Probenpunkten emittierten Fluoreszenzlichtes, kommen. Das von einem Detektionselement detektierte Fluoreszenzlicht muss also nicht ausschliesslich von dem zugeordneten Probenpunkt emittiert worden sein. Zur Unterdrückung dieses die Messergebnisse verfälschenden Überstrahlungseffekts wird erfindungsgemäß vorgeschlagen, den Abstand zwischen den Probenpunkten und den jeweils zugeordneten Detektionselementen möglichst gering zu wählen.

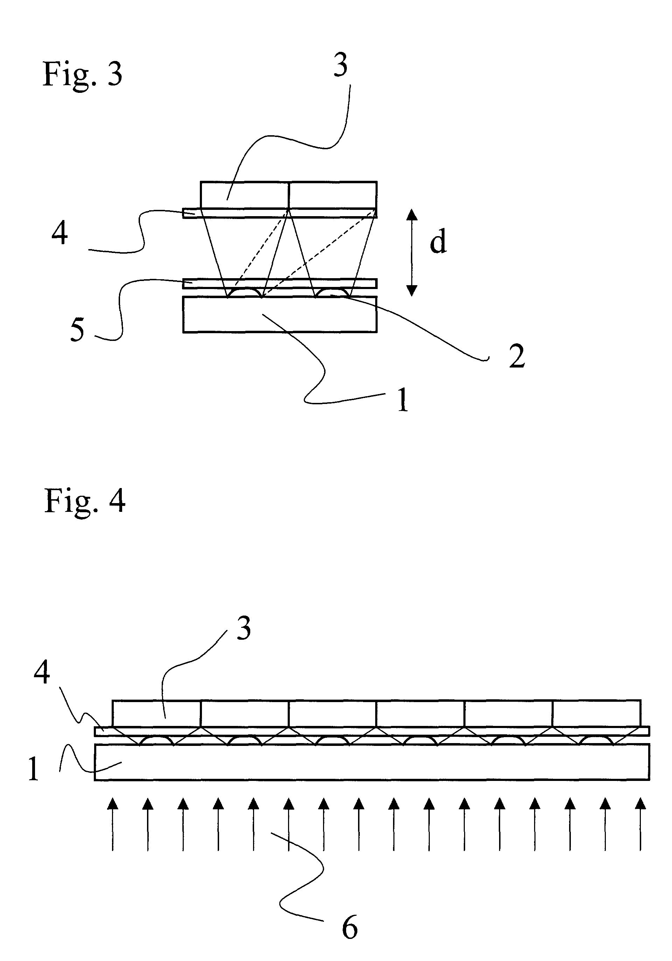

Fig. 3 illustriert den Strahlengang des von einem Probenpunkt 2 emittierten Fluoreszenzlichts und zeigt, dass der Anteil des von einem Probenpunkt emittierten Fluoreszenzlichtes, der nicht von dem diesem Probenpunkt zugeordneten Detektionselement erfasst wird, um so größer wird, je größer der Abstand d zwischen Probenpunkt und zugeordnetem Detektionselement wird.

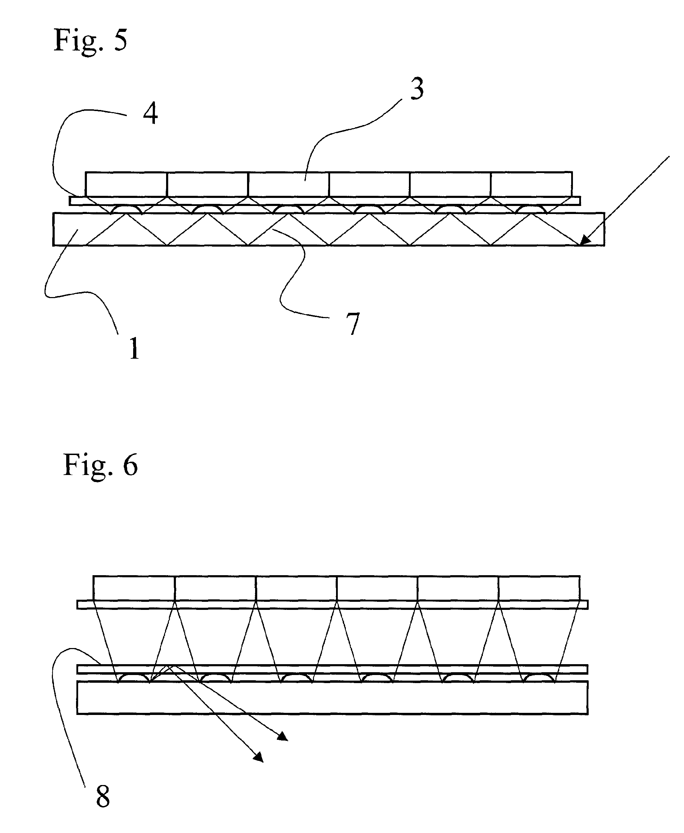

In der in Fig. 3 dargestellten Anordnung sind die Probenpunkte 2 mit einem Deckglas 5 abgedeckt, dessen auch optische Funktion in Verbindung mit Fig. 6 näher erläutert wird. Des weiteren ist zwischen den Probenpunkten 2 und den Detektionselementen 3 ein Filter 4 angeordnet, der im wesentlichen nur für das von den Probenpunkten emittierte Fluoreszenzlicht durchlässig ist und insbesondere als Sperrfilter für das Anregungslicht dient.

Bei der in Fig. 4 dargestellten Anordnung zur Detektion des von den auf dem Objektträger 1 angeordneten Probenpunkten 2 emittierten Fluoreszenzlichts ist der Abstand zwischen dem Objektträger 1 bzw. den Probenpunkten 2 und den jeweils zugeordneten Detektionselementen 3 möglichst gering gewählt, indem die Detektionselemente 3 quasi unmittelbar über den Probenpunkten 2 angeordnet sind. Zwischengeschaltet ist hier lediglich ein Filter 4, der als Sperrfilter für das Anregungslicht dient. In dem in Fig. 4 dargestellten Fall werden die Probenpunkte 2 von unten durch den für das Anregungslicht 6 durchlässigen Objektträger 1 beleuchtet, weshalb die in Fig. 4 dargestellte Anordnung auch als Durchlichtanordnung bezeichnet wird.

Fig. 5 zeigt eine Variante der erfindungsgemäßen Anordnung mit einer totalinternen Beleuchtung 7 der Probenpunkte 2. Hier ist der Objektträger 1 in Form eines Lichtleiters ausgebildet, in den das Licht einer Lichtquelle, beispielsweise eines Lasers, eingekoppelt wird. Die Beleuchtung der Probenpunkte 2 erfolgt hier über das sich an der Grenzfläche zwischen Objektträger 1 und Probenpunkten 2 ausbildende evaneszente Feld. Auch hier wieder sind die Detektionselemente 3 mit dem Filter 4 unmittelbar über den Probenpunkten 2 angeordnet.

In der in Fig. 6 dargestellten Anordnung ist zusätzlich zu dem Filter 4 zwischen den Probenpunkten 2 und den Detektionselementen 3 noch ein Element 8 in Form einer Glasplatte angeordnet, das zusätzlich dazu dient, eine Überlagerung des Fluoreszenzlichts mehrerer Probenpunkte 2 am Ort eines Detektionselements 3 zu unterdrücken. Fig. 6 illustriert den Strahlengang des in alle Raumwinkel gleichmäßig abgestrahlten Fluoreszenzlichtes eines Probenpunktes 2 und den Einfluss des Elements 8 auf diesen Strahlengang. Der Anteil des von einem Probenpunkt 2 emittierten Fluoreszenzlichtes, der im wesentlichen in Richtung des zugeordneten Detektionselements 3 ausgesandt wird und daher in einem spitzen Winkel auf die Glasplatte 8 trifft, tritt im wesentlichen ungehindert durch die Glasplatte 8 durch und wird von dem Detektionselement 3 erfasst, das dem emittierenden Probenpunkt 2 zugeordnet ist. Im Gegensatz dazu wird das in Richtung benachbarter Probenpunkte und den zugeordneten Detektionselementen ausgesandte Fluoreszenzlicht an der Glasplatte 8, genauer gesagt am Glas-Luft-Übergang, totalreflektiert, so dass dieser Anteil des Fluoreszenzlichtes von keinem Detektionselement detektiert wird.

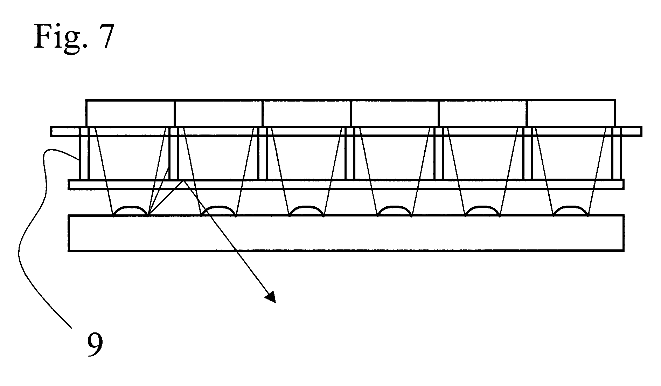

Bei der in Fig. 7 dargestellten Anordnung sind zusätzlich zu der Glasplatte 8 noch mechanische Barrieren 9 zwischen den einzelnen Probenpunkten 2 und den Detektionselementen 3 angeordnet. Diese Barrieren 9 begrenzen Detektionskanäle für die einzelnen Probenpunkte 2 und die zugeordneten Detektionselemente 3 und verhindern auf diese Weise eine Überlagerung des Fluoreszenzlichts mehrerer Probenpunkte 2 am Ort eines Detektionselements 3.

Abschliessend sei nochmals darauf hingewiesen, dass der Erfindung die Idee zugrunde liegt, mehrere Probenpunkte simultan zu beleuchten und mit Hilfe einer entsprechenden Anzahl von Detektionselementen, wie z.B. einem Fotodiodenarray oder einem CCD-Chip, simultan zu detektieren, analog einem Kontaktabzug in der Fototechnik. Dieses Parallelausleseverfahren ist prinzipiell schneller als abrasternde, scannende Verfahren.

Ein Problem ist dabei das Übersprechen in benachbarte Kanäle. Erfindungsgemäß ist erkannt worden, dass dieses Übersprechen um so kleiner ist, je dichter die Detektoren an die Probenpunkte gebracht werden.

Weiterhin kann ein Übersprechen dadurch verhindert werden, dass das Licht, das unter steilem Winkel in Richtung auf ein Nachbarelement emittiert wird, beispielsweise an einer Glas-Luft-Grenzfläche total reflektiert wird. Zwischen den einzelnen Detektionselementen können alternativ oder auch ergänzend dazu mechanische Barrieren zur Vermeidung von Übersprechen angeordnet werden.

### Bezugszeichenliste

- 1: Objektträger
- 2: Probenpunkte
- 3: Detektionselemente; Fotodioden
- 4: Filter
- 5: Deckglas
- 6: Anregungslicht
- 7: totalinterne Beleuchtung
- 8: Element; Glasplatte
- 9: Barriere
- d: Abstand zwischen (2) und (3)

## Patentansprüche

1. Anordnung zur Detektion von Fluoreszenzlicht mehrerer Probenpunkte (2), insbesondere von Microgen- oder Microbiospots, wobei die Probenpunkte (2) auf einem Objektträger (1) angeordnet sind, mit mindestens einer Lichtquelle zum simultanen Beleuchten der Probenpunkte (2) mit Anregungslicht und mit Detektionselemente (3) umfassenden Detektionsmitteln zum simultanen Detektieren des Fluoreszenzlichtes der einzelnen Probenpunkte (2),
**dadurch gekennzeichnet**, dass der Abstand d zwischen den Probenpunkten (2) und den jeweils zugeordneten Detektionselementen (3) möglichst gering gewählt ist.

2. Anordnung nach Anspruch 1, dadurch gekennzeichnet, dass die Detektionsmittel für jeden Probenpunkt (2) ein eigenes Detektionselement (3) umfassen.

3. Anordnung nach Anspruch 1, dadurch gekennzeichnet, dass jedem Probenpunkt (2) jeweils mehrere Detektionselemente (3) zugeordnet sind.

4. Anordnung nach einem der Ansprüche 1 bis 3, dadurch gekennzeichnet, dass Mittel vorgesehen sind, mit denen eine Überlagerung des Fluoreszenzlichtes mehrerer Probenpunkte (2) am Ort eines Detektionselements (3) oder mehrerer jeweils zugeordneter Detektionselemente (3), d.h. am Ort der Messwerterfassung, vermieden wird.

5. Anordnung nach einem der Ansprüche 1 bis 4, dadurch gekennzeichnet, dass zwischen den Probenpunkten (2) und den Detektionselementen (3) mindestens ein Element (8) angeordnet ist, das durchlässig ist für von einem Probenpunkt (2) im wesentlichen in Richtung des zugeordneten Detektionselements (3) ausgesandtes Fluoreszenzlicht und das in Richtung benachbarter Probenpunkte (2) ausgesandtes Fluoreszenzlicht totalreflektiert, so dass dieses Fluoreszenzlicht nicht detektiert wird.

6. Anordnung nach Anspruch 5, dadurch gekennzeichnet, dass das Element (8) in Form einer Glasplatte realisiert ist.

7. Anordnung nach einem der Ansprüche 2 bis 6, dadurch gekennzeichnet, dass zwischen den Probenpunkten (2) und den Detektionselementen (3) mechanische, lichtundurchlässige Barrieren (9) angeordnet sind, die Detektionskanäle für die einzelnen Probenpunkte (2) und zugeordneten Detektionselemente (3) begrenzen und auf diese Weise eine Überlagerung des Fluoreszenzlichtes mehrerer Probenpunkte (2) am Ort eines Detektionselements (3) oder mehrerer jeweils zugeordneter Detektionselemente (3), d.h. am Ort der Meßwerterfassung, unterdrücken.

8. Anordnung nach einem der Ansprüche 1 bis 7, dadurch gekennzeichnet, dass die Detektionsmittel mindestens ein Photodiodenarray umfassen.

9. Anordnung nach einem der Ansprüche 1 bis 7, dadurch gekennzeichnet, dass die Detektionsmittel mindestens einen CCD-Chip umfassen.

10. Anordnung nach einem der Ansprüche 1 bis 9, dadurch gekennzeichnet, dass der Objektträger (1) zumindestens für das Anregungslicht durchlässig ist und dass die Lichtquelle auf der den Probenpunkten (2) abgewandten Seite des Objektträgers (1) angeordnet ist, so dass die Probenpunkte (2) durch den Objektträger (1) hindurch beleuchtet werden (Durchlichtbeleuchtung).

11. Anordnung nach einem der Ansprüche 1 bis 9, dadurch gekennzeichnet, dass der Objektträger (1) in Form eines Lichtleiters ausgebildet ist und dass Mittel zum Einkoppeln des Anregungslichts der Lichtquelle in den Lichtleiter vorgesehen sind, so dass die Probenpunkte (2) von dem sich an der Grenzfläche zwischen Objektträger (1) und Probenpunkten (2) ausbildenden evaneszenten Feld beleuchtet werden (totalinterne Beleuchtung durch den Objektträger).

12. Anordnung nach einem der Ansprüche 1 bis 11, dadurch gekennzeichnet, dass eine im wesentlichen nur für das zu detektierende Fluoreszenzlicht durchlässige Filteranordnung (4) zwischen den Probenpunkten (2) und den Detektionselementen (3) angeordnet ist.
